# FASCICULE DE BREVET EUROPEEN

(11) **EP 4 288 309 B1**
(45) Date de publication et mention de la délivrance du brevet: **26.02.2025**
(21) Numéro de dépôt: 22712600.0
(22) Date de dépôt: 06.01.2022
(51) Int. Cl.: B60R 25/10, B60R 25/40, G08B 13/16

(54) **PROCÉDÉ DE GESTION DU FONCTIONNEMENT D'UN DISPOSITIF DE DÉTECTION D'INTRUSION D'UN APPAREILLAGE ANTIVOL D'UN VÉHICULE AUTOMOBILE, SYSTÈME, DISPOSITIF, APPAREILLAGE ET VÉHICULE AUTOMOBILE ASSOCIÉS**
VERFAHREN ZUR VERWALTUNG DES BETRIEBS EINER EINBRUCHSERKENNUNGSVORRICHTUNG EINER DIEBSTAHLSICHERUNG EINES KRAFTFAHRZEUGS UND ZUGEHÖRIGES SYSTEM, VORRICHTUNG, GERÄT UND KRAFTFAHRZEUG
METHOD FOR MANAGING THE OPERATION OF AN INTRUSION DETECTION DEVICE OF AN ANTI-THEFT APPARATUS OF A MOTOR VEHICLE, AND ASSOCIATED SYSTEM, DEVICE, APPARATUS AND MOTOR VEHICLE

(30) Priorité: 08.02.2021 FR 2101186
(43) Date de publication de la demande: 13.12.2023
(73) Titulaire: Stellantis Auto SAS, 78300 Poissy (FR)
(72) Inventeur: MATHEY, Antonin, 70200 LYOFFANS (FR); MALVY, Thomas, 70110 ATHESANS ETROITEFONTAINE (FR); SAUVAGEOT, Sebastien, 25200 MONTBELIARD (FR)
(74) Mandataire: ESIP
(86) Numéro de dépôt international: PCT/FR2022/050030
(87) Numéro de publication internationale: WO 2022/167739

(56) Documents cités:
- FR-A1- 2 662 263
- FR-A1- 2 738 543
- FR-A3- 2 764 418
- US-A- 5 483 219

## Description

### Domaine technique de l'invention

La présente invention revendique la priorité de la demande française 2101186 déposée le 8.02.2021. La présente invention concerne le domaine des appareillages antivol pour véhicule automobiles, i.e. notamment les appareillages électroniques et informatiques qui sont embarqués à bord des véhicules automobiles pour prémunir contre le vol de véhicule. L'invention porte en particulier sur un procédé de gestion, par un système informatique, du fonctionnement d'un dispositif de détection d'intrusion d'un appareillage antivol d'un véhicule automobile. L'invention concerne également un système informatique mettant en œuvre un tel procédé, un dispositif de détection d'intrusion comprenant un tel système, un appareillage antivol comportant un tel dispositif de détection d'intrusion ainsi qu'un véhicule automobile comportant un tel appareillage antivol. L'invention s'applique notamment aux véhicules de tourisme, aux poids lourds, aux autobus, aux véhicules utilitaires, etc.

### État de la technique antérieure

On sait que la plupart des appareillages antivol des véhicules automobiles actuels comprennent à minima une sirène et un dispositif de détection d'intrusion, qui comporte généralement un ou plusieurs capteurs à ultrasons afin de permettre la réalisation de détections d'intrusion ou, en d'autres termes, afin de permettre la surveillance du volume de l'habitacle et/ou d'autres compartiments des véhicules. On sait aussi que les composants des appareillages antivol actuels sont généralement capables de communiquer entre eux et avec des unités de commande électroniques des véhicules automobiles en utilisant pour ce faire les réseaux transmission de données qui équipent de nos jours la plupart des véhicules automobiles (e.g. LIN, CAN, Ethernet, etc.), Et, le plus souvent, ces moyens de communication sont utilisés pour permettre, entre autres, à un calculateur maître d'un véhicule automobile de transmettre régulièrement un signal de réveil, i.e. des données caractérisant un signal de réveil, à la sirène d'un appareillage antivol, et ce afin de pouvoir prémunir l'appareillage antivol d'un acte malveillant d'un voleur qui chercherait à empêcher le déclenchement de la sirène en sectionnant des câbles qui relient le calculateur maître et la sirène.

Cependant, compte tenu de l'architecture et de la configuration des réseaux de transmission de données pour véhicules automobiles actuels, notamment les réseaux de transmission de données qui sont habituellement utilisés dans un véhicule automobile pour connecter ensemble un appareillage antivol et un calculateur maître du véhicule, on constate que la résolution du problème évoqué ci-dessus par le biais de transmissions régulières de signaux de réveil entre le calculateur maître et la sirène de l'appareillage antivol implique un inconvénient majeur en matière de gaspillage d'énergie au niveau des dispositifs de détection d'intrusion des appareillages antivol. En effet, ces données qui sont régulièrement transmises par le calculateur maître du véhicule sont également reçues au niveau d'une interface de communication du dispositif de détection d'intrusion de l'appareillage antivol et, à chaque réception de ces données, le dispositif de détection d'intrusion se voit contraint de fonctionner immédiatement selon un premier mode de fonctionnement, dit d'éveil, dans lequel il peut réaliser une détection d'intrusion mais dans lequel, aussi, sa consommation électrique est maximale, et ce quand bien même les données reçues ne sont par nature pas destinées au dispositif de détection d'intrusion et, donc, alors que celui-ci ne doit pas forcément réaliser à cet instant précis une détection d'intrusion (les dispositifs de détection d'intrusion connus réalisent généralement plusieurs détections d'intrusion chaque seconde, ce qui implique qu'ils fonctionnent plusieurs fois par seconde en mode d'éveil). Et il est notoire que, pour la plupart des dispositifs de détection d'intrusion connus, il faut généralement un certain temps (e.g. 20ms) avant que, lorsqu'aucune donnée n'est reçue, le dispositif de détection d'intrusion fonctionnant en mode d'éveil puisse basculer et fonctionner de nouveau selon un deuxième mode de fonctionnement, dit de veille, dans lequel sa consommation électrique est réduite.

Ainsi, la solution connue pour parer au risque de section malveillante des câbles reliant le calculateur maître et la sirène d'un appareillage antivol implique bien un gaspillage d'énergie au niveau des dispositifs de détection d'intrusion des appareillages antivol connus car parfois, voire souvent, ceux-ci se voient contraints de fonctionner en mode d'éveil alors que cela n'est pas nécessaire. Et puisque l'appareillage antivol d'un véhicule est généralement utilisé uniquement lorsque le véhicule est à l'arrêt et verrouillé, situation dans laquelle la capacité de production d'énergie du véhicule est donc nulle et dans laquelle la (ou les) batterie(s) du véhicule est(sont) donc la(les) seule(s) source(s) d'énergie électrique disponible(s), les conséquences préjudiciables que ces gaspillages d'énergie intempestifs engendrent sur l'autonomie des batteries et, donc, sur la capacité à prémunir longtemps contre le vol de véhicule apparaissent de manière évidente.

FR 2 662 263 A1 divulgue un détecteur à ultrasons volumétrique.

### Résumé de l'invention

L'invention vise à pallier ces inconvénients. L'invention a en particulier pour but de minimiser l'énergie gaspillée par un dispositif de détection d'intrusion d'un appareillage antivol d'un véhicule automobile. Par ce biais, l'invention a pour dessein d'augmenter l'autonomie des batteries des véhicules automobiles et permettre ainsi une protection plus durable contre le vol de véhicule.

Ces buts sont atteints, selon un premier objet de l'invention, au moyen d'un procédé de gestion, par un système informatique, d'un dispositif de détection d'intrusion d'un appareillage antivol d'un véhicule automobile, ledit dispositif de détection d'intrusion comportant au moins un capteur à ultrasons, le procédé comprenant les étapes de :
- déterminer si des données caractérisant un signal de réveil destinées à une sirène de l'appareillage antivol et transmises par une unité de commande électronique du véhicule sont reçues ; et, lorsqu'il est établi que tel est le cas,
- déterminer la durée d'un intervalle de temps entre l'instant courant et celui auquel la prochaine réalisation d'une détection d'intrusion dans le véhicule au moyen du capteur interviendra ; et, lorsqu'il est établi que la durée est inférieure ou égale à une valeur seuil préétablie,

- provoquer la réalisation d'une détection d'intrusion dans le véhicule au moyen du capteur ; et
- déterminer, en fonction de l'instant courant, un instant ultérieur pour la prochaine réalisation d'une détection d'intrusion dans le véhicule au moyen du capteur ; ou, lorsqu'il est établi que la durée est supérieure à la valeur seuil,
- gérer le fonctionnement du dispositif de détection d'intrusion selon un mode de fonctionnement dans lequel sa consommation électrique est réduite.

Selon une variante avantageuse, l'étape consistant à gérer le fonctionnement du dispositif de détection d'intrusion selon un mode de fonctionnement dans lequel sa consommation électrique est réduite peut comprendre une étape consistant à provoquer la désactivation momentanée d'un module du dispositif de détection d'intrusion configuré pour traiter des signaux électriques générés par le capteur.

Selon une autre variante avantageuse, l'étape consistant à gérer le fonctionnement du dispositif de détection d'intrusion selon un mode de fonctionnement dans lequel sa consommation électrique est réduite peut comprendre une étape consistant à provoquer la désactivation momentanée d'une interface de communication du dispositif de détection d'intrusion.

En outre, l'invention a également pour objet un système pour gérer le fonctionnement d'un dispositif de détection d'intrusion d'un appareillage antivol d'un véhicule automobile, ledit dispositif de détection d'intrusion comportant au moins un capteur à ultrasons, ledit système comprenant au moins une unité de traitement d'informations, comprenant au moins un processeur, et un support de stockage de données configurés pour mettre en œuvre un procédé tel que décrit ci-dessus.

De plus, l'invention a aussi pour objet un programme d'ordinateur comprenant des instructions de code de programme pour l'exécution des étapes d'un procédé tel que décrit ci-dessus lorsque ledit programme est exécuté sur un ordinateur.

Par ailleurs, l'invention a également pour objet un support utilisable dans un ordinateur qui comprend un programme tel que décrit ci-dessus.

De plus, l'invention a également pour objet un dispositif de détection d'intrusion pour véhicule automobile comportant au moins un capteur à ultrasons et un système tel que décrit ci-dessus.

En outre, l'invention a également pour objet un appareillage antivol pour véhicule automobile comportant au moins une sirène et un dispositif de détection d'intrusion tel que décrit ci-dessus.

Enfin, l'invention a aussi pour objet un véhicule automobile comprenant un appareillage antivol tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un diagramme fonctionnel d'un système selon l'invention ;
[Fig. 2] est un organigramme illustrant les étapes d'un procédé selon l'invention ; et
[Fig. 3] est un schéma montrant des graphiques qui illustrent les avantages du procédé selon l'invention.

### Description détaillée de l'invention

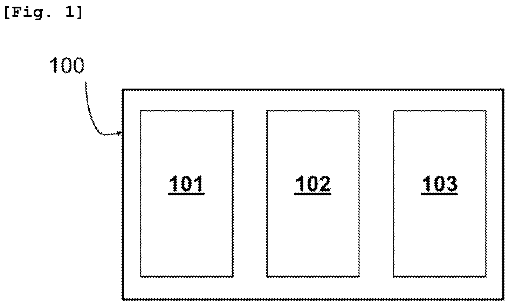

Selon l'invention, un système 100 pour gérer le fonctionnement d'un dispositif de détection d'intrusion d'un appareillage antivol d'un véhicule automobile est un système informatique, représenté à la figure 1, qui comprend une unité de traitement d'informations 101, comprenant un ou plusieurs processeurs, un support de stockage de données 102 et au moins une interface d'entrée et sortie 103 permettant l'émission et la réception de données.

Selon certains modes de réalisation, le système 100 selon l'invention est embarqué à bord d'un véhicule automobile (e.g. voitures, poids lourds, autobus, véhicules utilitaires, etc.) et il est hébergé sur un ou plusieurs des calculateurs ou autres unités de commande électroniques du véhicule. Selon d'autres modes de réalisation, le système 100 est hébergé sur un calculateur d'un véhicule automobile et il interagit par le biais de son interface d'entrée et sortie 103 avec un appareillage antivol d'un véhicule automobile, qui comprend un dispositif de détection d'intrusion, qui comporte au moins un capteur à ultrasons, et une sirène. Selon le mode de réalisation préféré, le système 100 selon l'invention fait partie intégrante d'un dispositif de détection d'intrusion d'un appareillage antivol pour véhicule automobile qui comprend au moins un capteur à ultrasons, un module configuré pour traiter des signaux électriques générés par le capteur à ultrasons et une interface de communication configurée pour permettre la connexion du dispositif de détection d'intrusion à un réseau de communication d'un véhicule automobile (e.g. LIN, CAN, Ethernet). Par ces moyens, le système 100 selon l'invention est notamment en mesure de déterminer si des données caractérisant un signal de réveil destinées à une sirène d'un appareillage antivol et transmises par une unité de commande électronique d'un véhicule sont reçues, de déterminer la durée d'un intervalle de temps entre l'instant courant et celui auquel la prochaine réalisation d'une détection d'intrusion interviendra, de provoquer la réalisation d'une détection d'intrusion dans un véhicule, i.e. de gérer le déclenchement d'un processus de détection d'intrusion permettant de surveiller le volume de l'habitacle ou d'un autre compartiment d'un véhicule, et de déterminer, en fonction de l'instant courant, un instant ultérieur pour la prochaine réalisation d'une détection d'intrusion dans un véhicule. En outre, de manière avantageuse, ces moyens permettent également au système 100 selon l'invention de gérer le fonctionnement d'un dispositif de détection d'intrusion d'un appareillage antivol d'un véhicule automobile selon un mode de fonctionnement dans lequel sa consommation électrique est réduite.

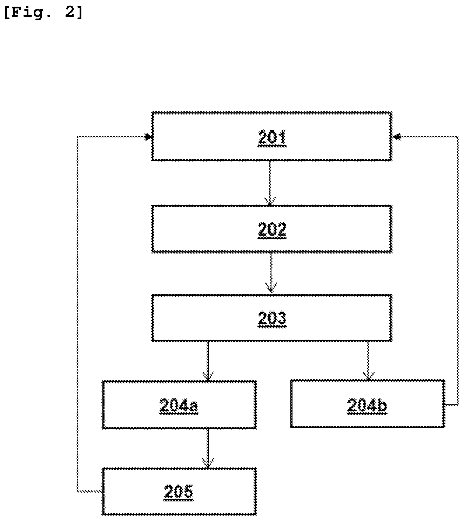

Selon l'invention, tous les éléments décrits ci-dessus contribuent pour permettre au système 100 selon l'invention de mettre en œuvre un procédé de gestion du fonctionnement d'un dispositif de détection d'intrusion à capteur(s) à ultrasons d'un appareillage antivol d'un véhicule automobile, tel que décrit ci-dessous en lien avec les figures 2-3.

Selon une première étape 201 du procédé selon l'invention, le système 100 selon l'invention détermine si des données caractérisant un signal de réveil destinées à une sirène de l'appareillage antivol et transmises par une unité de commande électronique du véhicule sont reçues. En effet, comme déjà évoqué en préambule, le calculateur maître du véhicule transmet périodiquement (i.e. plusieurs fois chaque seconde) des données caractérisant un signal de réveil à destination de la sirène de l'appareillage antivol et ces données sont reçues, via l'interface de communication du dispositif de détection d'intrusion, par l'interface d'entrée et sortie 103 du système selon l'invention. Ainsi, par cette première étape 201 du procédé selon l'invention, le système 100 selon l'invention effectue une surveillance de ces transmissions récurrentes de données caractérisant un signal de réveil entre une unité de commande électronique du véhicule et la sirène de l'appareillage antivol afin de déterminer des instants auxquels ces données sont reçues.

Ensuite, lorsqu'il a établi au cours de l'étape précédente 201 que des données caractérisant un signal de réveil destinées à une sirène de l'appareillage antivol et transmises par une unité de commande électronique du véhicule sont reçues, le système 100 selon l'invention réalise avantageusement les étapes suivantes du procédé selon l'invention décrites ci-dessous.

Selon une deuxième étape 202 du procédé selon l'invention, le système 100 selon l'invention détermine la durée d'un intervalle de temps entre l'instant courant et celui auquel la prochaine réalisation d'une détection d'intrusion dans le véhicule au moyen du capteur interviendra. En effet, on sait qu'un dispositif de détection d'intrusion réalise plusieurs détections d'intrusion chaque seconde et cela implique l'existence de moyens qui lui permettent de déterminer ces instants auxquels des réalisations de détection d'intrusion doivent intervenir. De tels moyens s'appuient, par exemple, sur le stockage de données caractérisant une valeur d'un paramètre de périodicité, i.e. la durée d'un intervalle de temps entre deux réalisations de détection d'intrusion, et/ou sur d'autres mécanismes de minuterie bien connus de l'homme du métier. Ainsi, durant cette deuxième étape 202 du procédé selon l'invention, le système 100 selon l'invention s'appuie sur ces moyens, en utilisant préférentiellement pour ce faire son support de stockage de données 102 sur lequel, comme on le verra ci-après, des données caractérisant un instant auquel la prochaine réalisation d'une détection d'intrusion dans le véhicule au moyen du capteur interviendra ont antérieurement été enregistrées. Ainsi, à chaque fois que des données caractérisant un signal de réveil sont reçues au niveau de l'interface d'entrée et sortie 103, le système 100 selon l'invention estime la durée de l'intervalle de temps qui sépare l'instant courant, i.e. celui auquel les données sont reçues, et celui auquel la prochaine réalisation de détection d'intrusion interviendra.

Ensuite, selon une troisième étape 203 du procédé selon l'invention, le système 100 selon l'invention établit si la durée déterminée au cours de l'étape précédente 202 est inférieure ou égale à une valeur seuil préétablie (e.g. 15ms). Pour ce faire, les système 100 selon l'invention utilise préférentiellement son support de stockage de données 102 sur lequel des données caractérisant la valeur seuil préétablie ont été enregistrées en usine au moment de la fabrication du dispositif de détection d'intrusion. Et lorsqu'il établit que la durée déterminée au cours de l'étape précédente 202 est inférieure ou égale à la valeur seuil, le système 100 selon l'invention réalise les deux étapes suivantes du procédé selon l'invention décrites ci-après.

Selon une quatrième étape 204a du procédé selon l'invention, le système 100 selon l'invention provoque la réalisation immédiate d'une détection d'intrusion dans le véhicule au moyen du capteur. En d'autres termes, par cette quatrième étape 204a du procédé selon l'invention, le système 100 selon l'invention anticipe la réalisation d'une détection d'intrusion dans le véhicule lorsqu'il a établi au cours de l'étape précédente que la prochaine réalisation d'une détection d'intrusion interviendra dans un laps de temps relativement court après l'instant courant. Et ensuite, selon une cinquième étape 205 du procédé selon l'invention, le système 100 selon l'invention détermine, en fonction de l'instant courant, un instant ultérieur pour la prochaine réalisation d'une détection d'intrusion dans le véhicule au moyen du capteur. Pour ce faire, le système 100 selon l'invention utilise par exemple les données caractérisant une valeur d'un paramètre de périodicité évoquées ci-dessus qui sont enregistrées sur son support de stockage de données 102 pour déterminer, en fonction de l'instant courant et de la valeur du paramètre de périodicité, un instant ultérieur, i.e. dans le futur, auquel la prochaine détection d'intrusion dans le véhicule devra intervenir.

Au contraire, lorsqu'il a établi au cours de la troisième étape 203 du procédé selon l'invention que la durée déterminée au cours de la deuxième étape 202 du procédé selon l'invention est supérieure à la valeur seuil, le système 100 selon l'invention réalise une unique et ultime quatrième étape 204b du procédé selon l'invention au cours de laquelle il gère le fonctionnement du dispositif de détection d'intrusion selon un mode de fonctionnement dans lequel sa consommation électrique est réduite, i.e. selon un mode de fonctionnement qui correspond au mode de veille décrit en préambule. Pour ce faire, le système 100 selon l'invention peut par exemple réaliser une étape subsidiaire au cours de laquelle il provoque la désactivation momentanée du module du dispositif de détection d'intrusion configuré pour traiter des signaux électriques générés par le capteur. Alternativement, ou cumulativement, le système 100 selon l'invention peut réaliser une autre étape subsidiaire au cours de laquelle il provoque la désactivation momentanée de l'interface de communication du dispositif de détection d'intrusion.

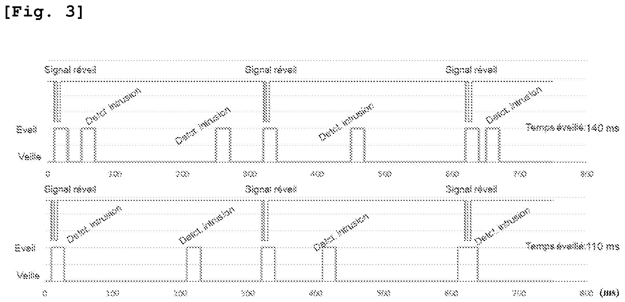

Par conséquent, aux termes du procédé et du système selon l'invention décrits ci-dessus, une solution est fournie pour minimiser l'énergie gaspillée par un dispositif de détection d'intrusion d'un appareillage antivol d'un véhicule automobile et, donc, pour augmenter l'autonomie des batteries des véhicules automobiles pour ainsi permettre une protection plus durable contre le vol de véhicule. En effet, comme cela apparaît à la lecture de la figure 3, qui montre, en sa partie supérieure, les basculements entre mode d'éveil et mode de veille d'un dispositif de détection d'intrusion connu en fonction de signaux d'éveil transmis et, en sa partie inférieure, les mêmes basculements pour un dispositif de détection d'intrusion muni du système selon l'invention mettant en œuvre le procédé selon l'invention, le procédé et le système selon l'invention contribuent pour permettre de minimiser de manière significative le temps passé par un dispositif de détection d'intrusion d'un appareillage antivol d'un véhicule automobile en mode d'éveil, et ce dans le contexte habituel de fonctionnement des appareillages antivol pour véhicules automobiles où des données caractérisant un signal d'éveil sont régulièrement émises par une unité de commande électronique à destination de la sirène de l'appareillage antivol. Par ce bais, le système et le procédé selon l'invention décrits ci-dessus contribuent bien à augmenter l'autonomie des batteries des véhicules automobiles, permettant ainsi une protection plus durable contre le vol de véhicule.

## Revendications

1. Procédé de gestion, par un système informatique (100), du fonctionnement d'un dispositif de détection d'intrusion d'un appareillage antivol d'un véhicule automobile, ledit dispositif de détection d'intrusion comportant au moins un capteur à ultrasons, **caractérisé en ce que** le procédé comprend les étapes de :
• déterminer si des données caractérisant un signal de réveil destinées à une sirène de l'appareillage antivol et transmises par une unité de commande électronique du véhicule sont reçues ; et, lorsqu'il est établi que tel est le cas,
• déterminer la durée d'un intervalle de temps entre l'instant courant et celui auquel la prochaine réalisation d'une détection d'intrusion dans le véhicule au moyen du capteur interviendra ; et, lorsqu'il est établi que la durée est inférieure ou égale à une valeur seuil préétablie,
• provoquer la réalisation d'une détection d'intrusion dans le véhicule au moyen du capteur ; et
• déterminer, en fonction de l'instant courant, un instant ultérieur pour la prochaine réalisation d'une détection d'intrusion dans le véhicule au moyen du capteur ; ou, lorsqu'il est établi que la durée est supérieure à la valeur seuil,
• gérer le fonctionnement du dispositif de détection d'intrusion selon un mode de fonctionnement dans lequel sa consommation électrique est réduite.

2. Procédé selon la revendication 1, **caractérisé en ce que** l'étape consistant à gérer le fonctionnement du dispositif de détection d'intrusion selon un mode de fonctionnement dans lequel sa consommation électrique est réduite comprend une étape consistant à provoquer la désactivation momentanée d'un module du dispositif de détection d'intrusion configuré pour traiter des signaux électriques générés par le capteur.

3. Procédé selon l'une des revendications précédentes, **caractérisé en ce que** l'étape consistant à gérer le fonctionnement du dispositif de détection d'intrusion selon un mode de fonctionnement dans lequel sa consommation électrique est réduite comprend une étape consistant à provoquer la désactivation momentanée d'une interface de communication du dispositif de détection d'intrusion.

4. Système (100) pour gérer le fonctionnement d'un dispositif de détection d'intrusion d'un appareillage antivol d'un véhicule automobile, ledit dispositif de détection d'intrusion comportant au moins un capteur à ultrasons, **caractérisé en ce que** le système comprend au moins une unité de traitement d'informations (101), comprenant au moins un processeur, et un support de stockage de données (102) configurés pour mettre en œuvre un procédé selon l'une quelconque des revendications précédentes.

5. Programme d'ordinateur comprenant des instructions de code de programme pour l'exécution des étapes d'un procédé selon l'une quelconque des revendications 1-3 lorsque ledit programme est exécuté sur l'unité de traitement d'informations du système de la revendication 4.

6. Support utilisable dans un ordinateur, **caractérisé en ce qu'**un programme selon la revendication 5 y est enregistré.

7. Dispositif de détection d'intrusion pour véhicule automobile, ledit dispositif de détection d'intrusion comportant au moins un capteur à ultrasons, **caractérisé en ce qu'il** comprend un système selon la revendication 4.

8. Appareillage antivol pour véhicule automobile comportant au moins une sirène, **caractérisé en ce qu'il** comprend un dispositif de détection d'intrusion selon la revendication 7.

9. Véhicule automobile, **caractérisé en ce qu'il** comprend un appareillage antivol selon la revendication 8.

## Patentansprüche

1. Verfahren zum Betreiben einer Einbruchmeldevorrichtung einer Einbruchmeldevorrichtung einer Diebstahlsicherungseinrichtung eines Kraftfahrzeugs durch ein Computersystem (100), wobei die Einbruchmeldevorrichtung mindestens einen Ultraschallsensor umfasst, **dadurch gekennzeichnet, dass** das Verfahren die folgenden Schritte umfasst:
• festzustellen, ob Daten empfangen werden, die ein Wecksignal kennzeichnen, das für eine Sirene der Diebstahlsicherung bestimmt ist und von einem elektronischen Steuergerät des Fahrzeugs übertragen wird; und, wenn festgestellt wird, dass dies der Fall ist,
• die Dauer eines Zeitintervalls zwischen dem aktuellen Zeitpunkt und dem Zeitpunkt bestimmen, zu dem das nächste Mal eine Einbruchserkennung im Fahrzeug mittels des Sensors stattfinden wird; und, wenn festgestellt wird, dass die Dauer kleiner oder gleich einem im Voraus festgelegten Schwellenwert ist,
• mit Hilfe des Sensors eine Einbruchserkennung im Fahrzeug zu veranlassen; und
• in Abhängigkeit von der aktuellen Uhrzeit einen späteren Zeitpunkt für die nächste Eindringerkennung in das Fahrzeug mittels des Sensors bestimmen; oder, wenn festgestellt wird, dass die Dauer größer als der Schwellenwert ist,
• Verwalten Sie den Betrieb des Einbruchmeldegeräts in einem Betriebsmodus, in dem der Stromverbrauch reduziert wird.

2. Verfahren nach Anspruch 1, **dadurch gekennzeichnet, dass** der Schritt der Steuerung des Betriebs der
Einbruchmeldevorrichtung in einer Betriebsart, in der ihr Stromverbrauch reduziert wird, einen Schritt umfasst, bei dem die vorübergehende Deaktivierung eines Moduls der Einbruchmeldevorrichtung bewirkt wird, das so konfiguriert ist, dass es elektrische Signale verarbeitet, die von dem Sensor erzeugt werden.

3. Verfahren nach einem der vorhergehenden Ansprüche, **dadurch gekennzeichnet, dass** der Schritt der Steuerung des Betriebs der Einbruchmeldevorrichtung gemäß einer Betriebsart, in der ihr Stromverbrauch reduziert wird, einen Schritt umfasst, bei dem die vorübergehende Deaktivierung einer Kommunikationsschnittstelle der Einbruchmeldevorrichtung bewirkt wird.

4. System (100) zur Steuerung des Betriebs einer Einbruchmeldeeinrichtung einer Diebstahlsicherungseinrichtung eines Kraftfahrzeugs, wobei die Einbruchmeldeeinrichtung mindestens einen Ultraschallsensor umfasst, **dadurch gekennzeichnet, dass** das System mindestens eine Datenverarbeitungseinheit (101) umfasst, die mindestens einen Prozessor umfasst, und ein Datenspeichermedium (102), das zur Implementierung eines Verfahrens konfiguriert ist gemäß einem der vorhergehenden Ansprüche.

5. Computerprogramm, umfassend Programmcodeanweisungen zum Ausführen von Schritten eines Verfahrens nach einem der Ansprüche 1 bis 3, wenn das Programm auf der Informationsverarbeitungseinheit des Systems nach Anspruch 4 ausgeführt wird.

6. Medium, das in einem Computer verwendet werden kann, **dadurch gekennzeichnet, dass** darin ein Programm nach Anspruch 5 gespeichert ist.

7. Einbruchmeldevorrichtung für Kraftfahrzeuge, wobei die Einbruchmeldevorrichtung mindestens einen Ultraschallsensor umfasst, **dadurch gekennzeichnet, dass** sie ein System nach Anspruch 4 umfasst.

8. Diebstahlsicherungseinrichtung für Kraftfahrzeuge mit mindestens einer Sirene, **dadurch gekennzeichnet, dass** sie eine Einbruchmeldeeinrichtung nach Anspruch 7 umfasst.

9. Kraftfahrzeug, **dadurch gekennzeichnet, dass** es eine Diebstahlsicherungseinrichtung nach Anspruch 8 umfasst.

## Claims

1. A method for managing, by a computer system (100), the operation of an intrusion detection device of an anti-theft apparatus of a motor vehicle, said intrusion detection device comprising at least one ultrasonic sensor, **characterized in that** the method comprises the steps of:
• determine whether data characterising a wake-up signal intended for a siren of the anti-theft equipment and transmitted by an electronic control unit of the vehicle are received; and, where it is established that this is the case,
• determine the duration of a time interval between the current moment and the time at which the next time an intrusion detection in the vehicle by means of the sensor will take place; and, where it is established that the duration is less than or equal to a pre-established threshold value,
• cause an intrusion detection in the vehicle by means of the sensor; and
• determine, depending on the current time, a later time for the next ingress detection in the vehicle by means of the sensor; or, where it is established that the duration is greater than the threshold value,
• manage the operation of the intrusion detection device in a mode of operation in which its power consumption is reduced.

2. A method according to claim 1, **characterized in that** the step of managing the operation of the intrusion detection device in a mode of operation in which its power consumption is reduced comprises a step of causing the momentary deactivation of a module of the intrusion detection device configured to process electrical signals generated by the sensor.

3. A method according to one of the preceding claims, **characterized in that** the step of managing the operation of the intrusion detection device according to an operating mode in which its power consumption is reduced comprises a step of causing the momentary deactivation of a communication interface of the intrusion detection device.

4. A system (100) for managing the operation of an intrusion detection device of an anti-theft apparatus of a motor vehicle, said intrusion detection device comprising at least one ultrasonic sensor, **characterized in that** the system comprises at least one data processing unit (101), comprising at least one processor, and a data storage medium (102) configured to implement a method according to any of the preceding claims.

5. A computer program comprising program code instructions for carrying out steps of a method according to any one of claims 1-3 when said program is executed on the information processing unit of the system of claim 4.

6. A medium that can be used in a computer, **characterised in that** a program according to claim 5 is stored therein.

7. Intrusion detection device for motor vehicles, said intrusion detection device comprising at least one ultrasonic sensor, **characterized in that** it comprises a system according to claim 4.

8. Anti-theft apparatus for motor vehicles having at least one siren, **characterized in that** it comprises an intrusion detection device according to claim 7.

9. Motor vehicle, **characterised in that** it comprises an anti-theft apparatus according to Claim 8.
